# EUROPEAN PATENT APPLICATION

(11) **EP 0 651 572 A2**
(43) Date of publication of application: **03.05.1995**
(21) Application number: 94116590.4
(22) Date of filing: 21.10.1994
(51) Int. Cl.: H04N 5/76, H04N 5/765

(54) **Prompted operation of electronic appliance**

(30) Priority: 27.10.1993 IT RM930712
(71) Applicant: EDICO S.r.l., I-00197 Roma (IT)
(72) Inventor: d'Errico, Federico, I-00186 Roma (IT)

(57) **Abstract**

An electronic apparatus that functions through an image display device, in particular a video cassette recorder; the main characteristic of the described electronic device consists in the fact that it provides control means that allow at least two operative conditions of the apparatus and that allow, in one of said two operative conditions, the demonstration of all the essential functions of the apparatus, without the relative actual realisation of the operations taking place, so as to teach the user, by way of sending command signals, the use of the apparatus without placing at risk the result of the operation.

## Description

The present invention relates to an electronic apparatus that functions through an image display device, in particular a video cassette recorder.

It is known that video recorders are among the most complicated to use of domestic apparatuses, due to the multiplicity of functions provided; furthermore an error by the user can easily have at times irreparable consequences, such as the undesired cancellation of an important recording.

The aim of the present invention is that of indicating how it is possible to realise a video recorder that eliminates, or greatly reduces, the aforementioned drawbacks of the known apparatuses.

In view of realising such aim, the present invention has as its subject an electronic apparatus that functions through an image display device, in particular a video cassette recorder, characterised in that it provides control means that allow at least two operative conditions of the apparatus and that allow, in one of said two operative conditions, the demonstration of all the essential functions of the apparatus, without the relative actual realisation of the operations taking place, so as to teach the user, by way of sending command signals, the use of the apparatus without placing at risk the result of the operation.

The invention is based on the acknowledgement of the fact that, so as to avoid as far as possible errors of use, it is important that the user has learnt well all the commands and their effects, before actually operating the apparatus.

The characteristics and advantages of the present invention shall result in being clear from the following description and annexed drawings supplied purely as an explanatory and non-limiting example, wherein:
- figure 1 represents the simplified block diagram of a video recorder according to the invention;
- figure 2 schematically represents a significant part of the logic control circuit of the video recorder of figure 1.
- figure 3 schematically represents a second significant part of the logic control circuit of the video recorder of figure 1.

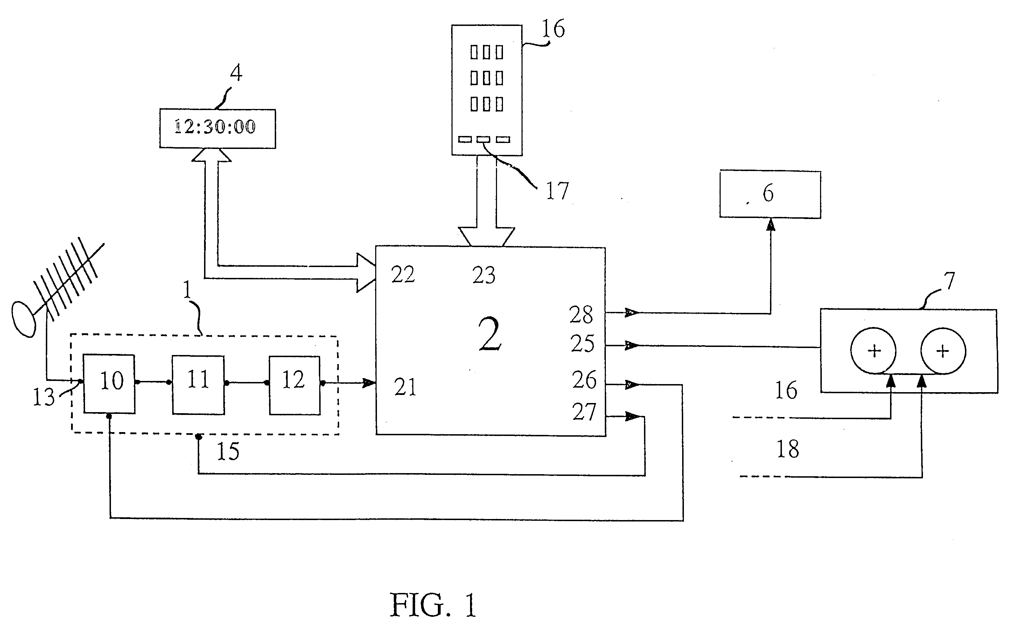

In figure 1, that schematically represents in a simplified manner the circuit of a video recorder according to the invention, reference number 13 indicates the input for the signal of the antenna of the receiving circuits block 1 of the apparatus.

Reference number 10 indicates a tuner, reference number 11 the intermediate frequency amplifier, and reference number 12 the video detector; said circuits are all of the conventional type.

Reference number 2 indicates a microcontroller that manages the apparatus; it is connected to block 12 from which it receives at the terminal 21 the demodulated video signal; it is also connected to a digital clock 4 by way of the terminal 22 and to a command device, indicated with reference number 16, by way of terminal 23.

The command device 16 supplies the microcontroller 2 the commands given by the user; the command device 16 can be a numeric keyboard (for example associated to a remote control unit) or any other suitable device for the introduction of data.

The device 16 has, from among which, a key or button 17, distinguished by the indication "Learn".

The microcontroller 2, by way of terminal 28 can control a display 6 (for example for indicating the reference number of the selected channel); by way of the terminal 25 it can control the functioning of the recording unit 7, in particular the beginning and the end of recording of the cassette making up part of the recording unit 7; by way of the terminal 26 it can control the tuner 10 for selecting the channel chosen by the user; and finally, by way of the terminal 27 it can turn on or off the receiving part of the system (15).

The recording unit 7 receives from block 11 the video and audio signals to record by way of conductors 16 and 18.

The key 17, when pressed by the user, causes the activation of the apparatus in a special operative condition, the "Learn" mode, within which the pressing of other keys, rather than producing the normal operative effects, only produces the appearance on the screen of the television, or monitor, connected with the video recorder, a series of informative text explaining the normal effect of the actual key.

For instance, in the "Learn" mode, by pressing the "Record" key a warning text will appear on the screen of the type "this key causes the recording on the cassette of the tuned television transmission; ATTENTION: such recording will cancel all previous recordings; it is necessary therefore to control that the cassette does not contain recordings that are desired to be kept."

Naturally in the normal operative mode, on the other hand, no text appears and the recording operation will take place as per normal.

Similarly, pressing the "Play" key, in the "Learn" mode, a text will appear of the type "This key causes the reproduction on the screen of the program recorded on the cassette"; corresponding explanatory texts will appear by pressing the programming key, those relative to the special effects, and so on.

In a preferred version of the invention three operative modes are provided:
- "Normal" mode (operationally normal);
- "Learn" mode (only information on the effect of the key pressed and no actual operation);
- "Caution" mode, in which first of all the text appears, as in the "Learn" mode, and, then by pressing once again the key, the corresponding effective operation is enabled.

It is convenient that beside the key "Learn", another two keys be provided, distinguished with "Normal" and "Caution".

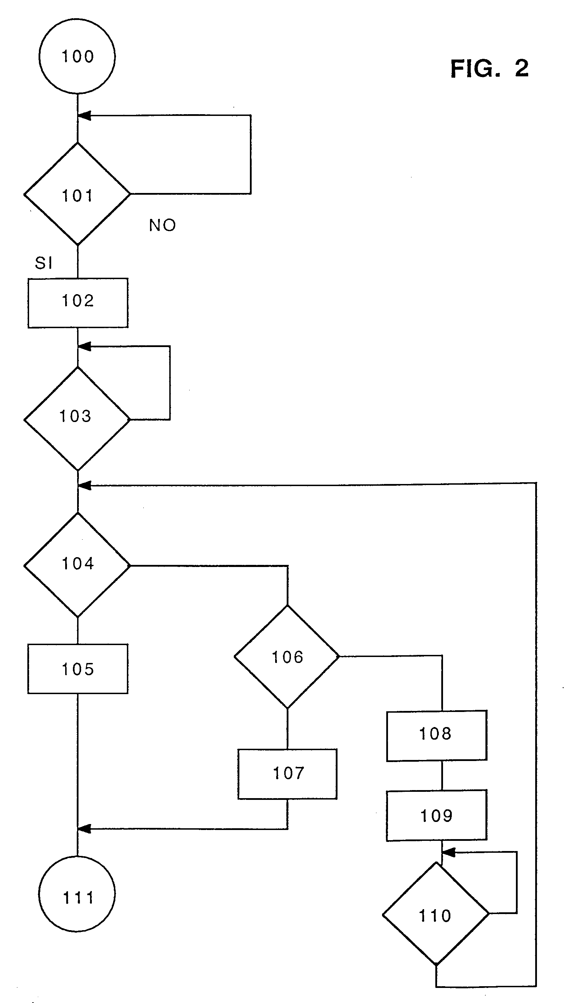

For a clearer understanding, the figure 2 schematically represents a significant part of the logic control circuit of the video recorder.

The block 100 is the starting block of the "Learn" function of the video recorder; control passes to the successive block 101.

Block 101 is a control block; it verifies whether the key 17 "Learn" has been pressed on the command device (remote control unit); in the affirmative case control is passed to block 102, in the negative case control is passed to block 107 (in all the control blocks the inferior output is the YES output; the lateral output is the NO output).

Block 102 provides for setting the flag "L" (Learn) and to eventually reset the flags "N" (Normal) and "C" (Caution); control then passes to the successive block 103.

Block 103 is a control block; it verifies whether any key has been pressed on the command device (remote control unit); in the affirmative case control is passed to block 104, in the negative case control is passed back to block 103
Block 104 is a control block; it verifies whether the key "Normal" has been pressed on the command device (remote control unit); in the affirmative case control is passed to block 105, in the negative case control is passed to block 106.

Block 105 provides for setting the flag "N" (Normal) and to eventually reset the flags "L" (Learn) and "C" (Caution); control then passes to the successive block 111.

Block 106 is a control block; it verifies whether the key "Caution" has been pressed on the command device (remote control unit); in the affirmative case control is passed to block 107, in the negative case control is passed to block 108.

Block 107 provides for setting the flag "C" (Caution) and to eventually reset the flags "L" (Learn) and "N" (Normal); control then passes to the successive block 111.

Block 108 provides for pointing, in an appropriate table contained in an operative memory (ROM) of the microcontroller, the text corresponding to the key pressed by the user; the control then passes to the successive block 109.

Block 109 provides for displaying on the screen the text pointed by the previous block; control then passes to the successive block 110.

Block 110 is a control block; it verifies whether any key has been pressed on the command device (remote control unit); in the affirmative case control returns to block 104, in the negative case control is passed back to block 110.

Block 111 is the final block of the end of operation; the control can return to the initial block 100 or to another similar operative block of the control circuit.

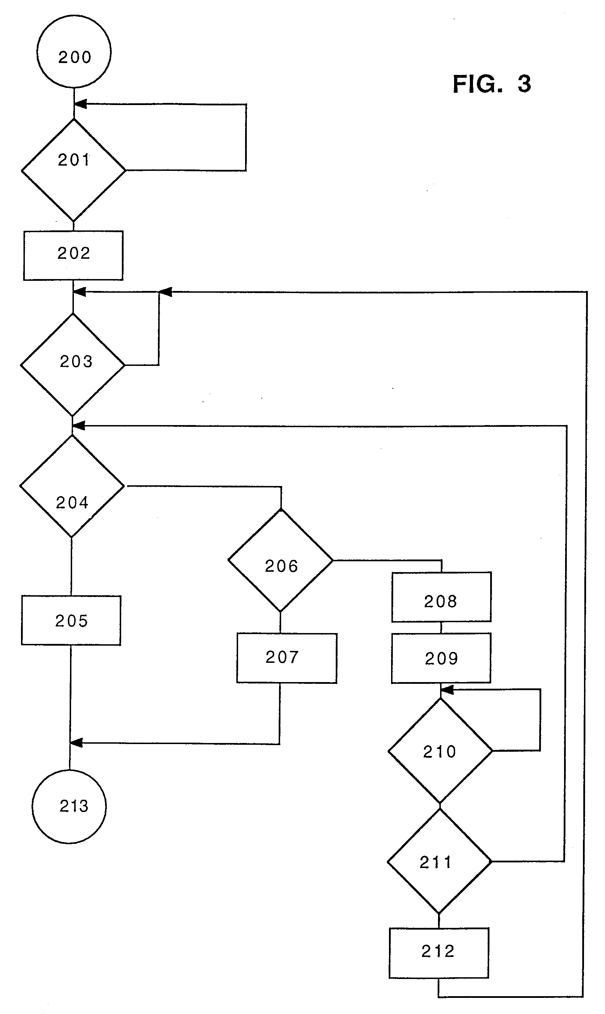

In figure 3 a second significant part of the logic control circuit of the video recorder is schematically represented.

The block 200 is the starting block of the "Caution" function of the video recorder; control passes to the successive block 201.

Block 201 is a control block; it verifies whether the key "Caution" has been pressed on the command device (remote control unit); in the affirmative case control is passed to block 202, in the negative case control is passed back to block 201.

Block 102 provides for setting the flag "C" (Caution) and to eventually reset the flags "L" (Learn) and "N" (Normal); control then passes to the successive block 203.

Block 203 is a control block; it verifies whether any key has been pressed on the command device (remote control unit); in the affirmative case control is passed to block 204, in the negative case control is passed back to block 203
Block 204 is a control block; it verifies whether the key "Normal" has been pressed on the command device (remote control unit); in the affirmative case control is passed to block 205, in the negative case control is passed to block 206.

Block 205 provides for setting the flag "N" (Normal) and to eventually reset the flags "L" (Learn) and "C" (Caution); control then passes to the successive block 213.

Block 206 is a control block; it verifies whether the key "Learn" has been pressed on the command device (remote control unit); in the affirmative case control is passed to block 207, in the negative case control is passed to block 208.

Block 207 provides for setting the flag "L" (Learn) and to eventually reset the flags "C" (Caution) and "N" (Normal); control then passes to the successive block 213.

Block 208 provides for memorising the code of the key pressed by the user, and to point, in an appropriate table contained in an operative memory (ROM) of the microcontroller, the text corresponding to the key pressed; the control then passes to the successive block 209.

Block 209 provides for displaying on the screen the text pointed by the previous block; control then passes to the successive block 210.

Block 210 is a control block; it verifies whether any key has been pressed on the command device (remote control unit); in the affirmative case control passes to block 211, in the negative case control is passed back to block 210.

Block 211 is a control block; it verifies whether the same key has been pressed on the command device (remote control unit) as the last key pressed; in the affirmative case control passes to block 212, in the negative case control is passed back to block 204.

Block 212 provides for carrying out the operation corresponding to the key pressed by the user; control then passes to block 203.

Block 213 is the final block of the end of operation; the control can return to the initial block 100 or to another similar operative block of the control circuit.

As results from the given description, the video recorder according to the invention has considerable advantages over the known apparatuses.

It is in fact clear that the video recorder according to the invention allows the user to learn the use of the apparatus "hands on" (it is known that users do not willingly read the instruction manuals, also because, they are often boring and it is difficult to find that which is of interest); in such manner the user quickly learns the manoeuvres of interest and thus avoids learning "at his own expense"!
It is clear that, remaining with the principle of the invention, numerous variants are possible to the characteristics of the video recorder described as an example, without for this departing from the novelty principles inherent in the inventive idea, as it is clear that the apparatus used in connection with the method described in the practical realisation of the invention can be varied in their specific characteristics and that the components used can be substituted with technically equivalent elements.

For example from among the number of possible variants that of applying a teaching system to the use of the apparatus not only to a video recorder, but to any electronic apparatus which can be connected to, or equipped with an image display device, such as a television, a video disc reader, etc.

## Claims

1. Electronic apparatus that functions through an image display device, in particular a video cassette recorder, characterised in that it provides control means (2; 101, 102, 103, 104, 105, 106, 107, 108, 109, 110) that allow at least two operative conditions (Normal, Learn, Caution) of the apparatus and that allow, in one (Learn, Caution) of said two operative conditions, the demonstration of all the essential functions of the apparatus, without the relative actual realisation of the operations taking place, so as to teach the user, by way of sending command signals, the use of the apparatus without placing at risk the result of the operation.

2. Electronic apparatus according to claim 1, characterised in that said two provided operative conditions comprise a first condition (Normal) of normal operations and a second condition (Learn) in which only information on the effect of the command signal generated in following the selecting of a key of a command device (16), without realising any actual operation.

3. Electronic apparatus according to claim 1, characterised in that in said second condition (Learn) a text containing, both the description of the pressed key, and eventually a warning of the precautions to take for avoiding undesirable effects, is displayed.

4. Electronic apparatus according to claim 1, characterised in that said control means (2) comprise verifying means (101) for ascertaining whether a key (17) has been pressed on the command device (16) corresponding to said second operative condition (Learn) and means (102) for enabling, in the affirmative case, said second operative state (Learn).

5. Electronic apparatus according to claim 1, characterised in that said control means (2) allow three operative conditions (Normal, Learn, Caution) and precisely a first normal operative condition (Normal), a second condition (Learn) in which only information on the effect of the command generated by way of selecting the command device is displayed, and a third condition (Caution), in which the text is initially displayed, as in the second condition (Learn), and by sending once again the same command generated by operating the same command device, the corresponding effective operation is enabled.

6. Electronic apparatus according to claim 5, characterised in that said control means (2) comprise verifying means (201) for ascertaining whether a given key (Caution) has been pressed on the command device corresponding to said third operative condition (Caution) and means (202) for enabling, in the affirmative case, said third operative state (Caution).

7. Electronic apparatus according to claim 4, characterised in that said control means (2) comprise memory means (ROM) containing the information to display for the user, and means (108, 109) for calling the information corresponding to the key pressed by the user, and to display it on the screen.

8. Electronic apparatus according to claim 6, characterised in that said control means (2) comprise memory means (ROM) containing the information to display for the user, and means (208, 209) for calling the information corresponding to the key pressed by the user, and to display it on the screen.

9. Electronic apparatus that functions through an image display device, according to one or more of the previous claims, characterised in that it is a television.

10. Electronic apparatus that functions through an image display device, according to one or more of the previous claims, characterised in that it is a video disc reader.
